# EUROPÄISCHE PATENTSCHRIFT

(11) **EP 3 728 378 B1**
(45) Veröffentlichungstag und Bekanntmachung des Hinweises auf die Patenterteilung: **16.08.2023**
(21) Anmeldenummer: 18814920.7
(22) Anmeldetag: 11.12.2018
(51) Int. Cl.: C08G 18/54, C08G 18/42, C08G 18/48, C08G 18/76, C08G 18/22, C08G 18/16, C08G 18/18, C08G 101/00

(54) **VERFAHREN ZUR HERSTELLUNG VON POLYURETHAN-HARTSCHAUMSTOFF-VERBUNDELEMENTEN UNTER VERWENDUNG VON MANNICH-POLYOLEN**
METHOD FOR THE PREPARATION OF POLYURETHANE HARD FOAM COMPOSITE ELEMENTS USING MANNICH POLYOLS
PROCÉDÉ DE FABRICATION D'ÉLÉMENTS COMPOSITES EN MOUSSES DURES DE POLYURÉTHANE À L'AIDE DE POLYOLS DE MANNICH

(30) Priorität: 21.12.2017 EP 17209668
(43) Veröffentlichungstag der Anmeldung: 28.10.2020
(73) Patentinhaber: BASF SE, 67056 Ludwigshafen am Rhein (DE)
(72) Erfinder: JACOBMEIER, Olaf, 49448 Lemfoerde (DE); KALUSCHKE, Tobias, 49448 Lemfoerde (DE); RENNER, Christian, 49448 Lemfoerde (DE); THATER, Michael, 49448 Lemfoerde (DE)
(74) Vertreter: BASF IP Association
(86) Internationale Anmeldenummer: PCT/EP2018/084331
(87) Internationale Veröffentlichungsnummer: WO 2019/121158

(56) Entgegenhaltungen:
- WO-A1-2017/155863
- KR-A- 20160 023 050

## Beschreibung

Die vorliegende Erfindung betrifft ein Verfahren zur Herstellung von Polyurethan-Hartschaumstoff-Verbundelementen, enthaltend mindestens eine Deckschicht und eine Polyurethanhartschaumstoffschicht, bei dem man (a) Polyisocyanate mit (b) Verbindungen mit mindestens zwei mit Isocyanatgruppen reaktiven Wasserstoffatomen gegebenenfalls (c) Flammschutzmittel, (d) Treibmittel, enthaltend mindestens einen aliphatischen oder cycloaliphatischen Kohlenwasserstoff mit 4 bis 8 Kohlenstoffatomen, (e) Katalysator und gegebenenfalls (f) Hilfs- und Zusatzstoffen zu einer Reaktionsmischung vermischt, die Reaktionsmischung auf die Deckschicht aufträgt und zum Polyurethanhartschaumstoff aushärtet, wobei die Komponente (b) mindestens ein Polyetheralkohol (b1), hergestellt durch Alkoxylierung eines Starters oder einer Startermischung mit einer mittleren Funktionalität von 4 bis 8 und einer Hydroxylzahl im Bereich zwischen 300 und 600 mg KOH/g, mindestens ein aromatisches Mannichkondensat (b2), das alkoxyliert sein kann, herstellbar durch Umsetzung einer aromatischen Verbindung, die an einem aromatischen Ring mindestens eine Hydroxylgruppe und/oder mindestens eine -NHR - Gruppe trägt, wobei R für einen beliebigen organischen Rest oder für Wasserstoff steht, einem oder mehreren Aldehyden und/oder Ketonen und einem oder mehreren primären oder sekundären Aminen und mindestens ein aromatisches Polyesterpolyol (b3) enthält, wobei der Anteil an aromatischem Mannich-Kondensat größer als 5 Gew.-% bis kleiner als 20 Gew.-%, bezogen auf das Gesamtgewicht der Komponente (b) beträgt und der Isocyanatindex beim Vermischen der Komponenten (a) bis (f) 160 bis 230 beträgt. Weiter betrifft die vorliegende Erfindung ein Polyurethan-Hartschaumstoff-Verbundelement, erhältlich nach einem solchen Verfahren.

Polyurethan-Hartschaumstoffe sind seit langem bekannt und werden vorwiegend zur Wärme- und Kälteisolation, z. B. in Kühlgeräten, in Warmwasserspeichern, in Fernwärmerohren oder im Bauwesen, beispielsweise in Verbundelementen aus Deckschichten und einem Kern aus Polyurethanhartschaumstoff, eingesetzt.

Die Herstellung von Verbundelementen aus insbesondere metallischen Deckschichten und einem Kern aus Schaumstoffen auf Isocyanatbasis, häufig auch als Sandwichelemente bezeichnet, auf kontinuierlich arbeitenden Doppelbandanlagen wird gegenwärtig in großem Umfang praktiziert. Neben Sandwichelementen zur Kühlhausisolierung gewinnen Elemente zur Gestaltung von Fassaden verschiedenster Gebäude immer mehr an Bedeutung.

Teilweise kommt es bei der Herstellung der Sandwichelemente zu unerwünschten Lufteinschlüssen zwischen der unteren Deckschicht und dem Schaumstoff auf Isocyanatbasis, sogenannten Lunkern. Diese Lufteinschlüsse zwischen Blech und Schaumstoff können besonders bei starken Temperaturwechseln und dunklen Farbtönen der Deckschicht in der Anwendung als Fassadenelement zu Ausbeulungen des Bleches führen und die Fassade unansehnlich machen. Daher ist eine gute Oberflächengüte mit einer geringen Lunkeranzahl sowie einer guten Haftung zwischen Deckschicht und Polyurethan-Hartschaumstoff wichtig bei der Herstellung von Sandwichelementen.

Oft ist technisch bedingt ein geringerer Flammschutzgehalt bzw. ein verbesserter Brandschutz wünschenswert. Der Brandschutz kann durch Einsatz von Polyisocyanuratschaumstoff verbessert werden. Polyisocyanuratschaumstoff wird üblicherweise erhalten durch Umsetzung von Polyisocyanaten mit Verbindungen mit gegenüber Isocyanaten reaktiven Wasserstoffatomen unter Einsatz von Trimerisierungskatalysator, beispielsweise Ammoniumcarboxylat oder Alkalimetallcarboxylat, wobei Temperaturen von mindestens 60 °C nötig sind. Da auch Polyisocyanuratschaumstoff einen hohen Anteil an Polyurethanbindungen enthält, umfasst der Begriff "Polyurethan-Hartschaumstoff" auch solche Polyisocyanuratschaumstoffe.

Nachteilig an Polyisocyanuratschaumstoffen ist eine geringe Haftung auf den Deckschichten, häufig ist der Einsatz eines Haftvermittlers erforderlich. Weiter ist es insbesondere bei dünnen Sandwichelementen mit einer Dicke von 100 mm und weniger technisch nicht einfach, die erforderlichen Umsetzungstemperaturen zu gewährleisten, wodurch sich die Brandschutzeigenschaften verschlechtern.

Aufgabe der vorliegenden Erfindung war es daher ein Verfahren zur Herstellung von Polyurethan-Hartschaumstoff-Verbundelementen zu liefern, wobei der Polyurethanhartschaumstoff auch ohne Einsatz von Haftvermittlern eine gute Haftung zu der oder den Deckschichten aufweist und auch bei Verarbeitungstemperaturen, insbesondere bei Werkzeug und Deckschichttemperaturen von kleiner als 60 °C, eine sehr gute Brandfestigkeit zeigt.

Überraschenderweise wurde diese Aufgabe gelöst durch ein Verfahren zur Herstellung von Polyurethan-Hartschaumstoff-Verbundelementen, enthaltend mindestens eine Deckschicht und eine Polyurethanhartschaumstoffschicht, bei dem man (a) Polyisocyanate mit (b) Verbindungen mit mindestens zwei mit Isocyanatgruppen reaktiven Wasserstoffatomen gegebenenfalls (c) Flammschutzmittel, (d) Treibmittel, enthaltend mindestens einen aliphatischen oder cycloaliphatischen Kohlenwasserstoff mit 4 bis 8 Kohlenstoffatomen, (e) Katalysator und gegebenenfalls (f) Hilfs- und Zusatzstoffen zu einer Reaktionsmischung vermischt, die Reaktionsmischung auf die Deckschicht aufträgt und zum Polyurethanhartschaumstoff aushärtet, wobei die Komponente (b) mindestens ein Polyetheralkohol (b1), hergestellt durch Alkoxylierung eines Starters oder einer Startermischung mit einer mittleren Funktionalität von 4 bis 8 und einer Hydroxylzahl im Bereich zwischen 300 und 600 mg KOH/g, mindestens ein aromatisches Mannichkondensat (b2), das alkoxyliert sein kann, herstellbar durch Umsetzung einer aromatischen Verbindung, die an einem aromatischen Ring mindestens eine Hydroxylgruppe und/oder mindestens eine -NHR-Gruppe trägt, wobei R für einen beliebigen organischen Rest oder für Wasserstoff steht, einem oder mehreren Aldehyden und/oder Ketonen und einem oder mehreren primären oder sekundären Aminen, und mindestens ein aromatisches Polyesterpolyol (b3) enthält, wobei der Anteil an aromatischem Mannich-Kondensat größer als 5 Gew.-% bis kleiner als 20 Gew.-%, bezogen auf das Gesamtgewicht der Komponente (b) beträgt und der Isocyanatindex beim Vermischen der Komponenten (a) bis (f) 160 bis 230 beträgt. Weiter betrifft die vorliegende Erfindung ein Polyurethan-Hartschaumstoff-Verbundelement, erhältlich nach einem solchen Verfahren. Vorzugsweise wird bei der Herstellung der erfindungsgemäßen Verbundelemente eine zweite Deckschicht eingesetzt, so dass ein Sanwichelement gebildet wird, das eine obere und eine untere Deckschicht aufweist und im Zwischenraum Polyurethan-Hartschaumstoff enthält. Das Verfahren soll kontinuierlich oder diskontinuierlich eingesetzt werden können. Eine diskontinuierliche Arbeitsweise kann zum Beispiel bei Anfahrvorgängen des Doppelbandes und bei mittels diskontinuierlich arbeitenden Pressen hergestellten Verbundelementen in Frage kommen. Eine kontinuierliche Anwendung erfolgt beim Einsatz von Doppelbandanlagen. Dabei wird beim Doppelbandverfahren die Reaktionsmischung beispielsweise mit Hoch- oder Niederdrucktechnik hergestellt und häufig mittels oszillierenden oder feststehenden Gießharken auf die untere Deckschicht. Auf die ausreagierende Reaktionsmischung wird dann die obere Deckschicht aufgebracht. Anschließend erfolgt die finale Aushärtung zum Polyurethan-Hartschaumstoff, vorzugsweise noch im Doppelband. Solche Verfahren sind bekannt und beispielsweise beschrieben im Kunststoffhandbuch, Band 7, "Polyurethane" Carl-Hanser-Verlag München, 3. Auflage, 1993 Kapitel 4.2.2, 6.2.2 und 6.2.3 beschrieben.

Als Deckschicht können flexible oder starre, bevorzugt starre Deckschichten, wie Gipskartonplatten, Glasfliese, Aluminiumfolien, Aluminium- Kupfer- oder Stahlbleche, bevorzugt Aluminiumfolien, Aluminium- oder Stahlbleche, besonders bevorzugt Stahlbleche verwendet werden. Dabei können die Deckschichten auch beschichtet sein, beispielsweise durch einen üblichen Lack. Die Deckschichten können beschichtet oder unbeschichtet sein. Die Deckschichten können vorbehandelt werden, beispielsweise mit Corona-, Lichtbogen-, Plasmabehandlung oder anderen üblichen Methoden.

Die Deckschicht wird im Doppelbandverfahren vorzugsweise mit einer konstanten Geschwindigkeit von 1 bis 60 m/min, bevorzugt 2 bis 50 m/min, besonders bevorzugt 2,5 bis 30 m/min und insbesondere 2,5 bis 20 m/min transportiert. Dabei befindet sich die Deckschicht zumindest ab dem Auftrag des Schaumsystems in einer waagerechten Position.

Vor dem Auftrag der Reaktionsmischung auf die untere Deckschicht wird beim erfindungsgemäßen Verfahren die Deckschicht bzw. die Deckschichten vorzugsweise von einer Rolle abgerollt, gegebenenfalls profiliert, gegebenenfalls erwärmt, gegebenenfalls vorbehandelt, um die Beschäumbarkeit mit Polyurethan zu erhöhen und optional mit Haftvermittler beschichtet. Im kontinuierlichen Doppelbandverfahren wird die Reaktionsmischung vorzugsweise im Doppelband ausgehärtet und letztlich auf die gewünschte Länge zugeschnitten.

Als Polyisocyanate (a) kommen die an sich bekannten aliphatischen, cycloaliphatischen, araliphatischen und vorzugsweise die aromatischen mehrwertigen Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente (a) in diesem Fall verschiedene mehrfunktionelle Isocyanate enthält. Als Polyisocyanat in Betracht kommende mehrfunktionelle Isocyanate weisen zwei (im folgenden Diisocyanate genannt) oder mehr als zwei Isocyanatgruppen pro Molekül auf.

Im Einzelnen seien insbesondere genannt: Alkylendiisocyanate mit 4 bis 12 Kohlenstoffatomen im Alkylenrest, wie 1,12-Dodecandiioscyanat, 2-Ethyltetramethylendiisocyanat-1,4,2-methylpentamethylendiisocyanat-1,5, Tetramethylendiisocyanat-1,4, und vorzugsweise Hexamethylendiisocyanat-1 ,6; cycloaliphatische Diisocyanate wie Cyclohexan-1 ,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Polyisocyanate, wie 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,4'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten.

Insbesondere geeignet sind 2,2'-, 2,4'- und/oder 4,4`-Diphenylmethandiisocyanat (MDI), 1,5-Naphthylendiisocyanat (NDI), 2,4- und/oder 2,6-Toluylendiisocyanat (TDI), 3,3'-Dimethyl-diphenyldiisocyanat, 1,2-Diphenylethandiisocyanat und/oder p-Phenylen-diisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-iso-cyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat und 4,4'-, 2,4'- und/oder 2,2'-Dicyclohexylmethandiisocyanat.

Häufig werden auch modifizierte Polyisocyanate, d.h. Produkte, die durch chemische Umsetzung organischer Polyisocyanate erhalten werden und die mindestens zwei reaktive Isocyanatgruppen pro Molekül aufweisen, verwendet. Insbesondere genannt seien Ester-, Harnstoff-, Biuret-, Allophanat-, Carbodiimid-, Isocyanurat-, Uretdion-, Carbamat- und/oder Urethangruppen enthaltende Polyisocyanate, häufig auch zusammen mit nicht umgesetzten Polyisocyanaten

Besonders bevorzugt enthalten die Polyisocyanate der Komponente (a) 2,2'-MDI oder 2,4'-MDI oder 4,4'-MDI (auch als monomeres Diphenylmethan oder MMDI bezeichnet) oder oligomeres MDI, das aus höherkernigen Homologen des MDI, welche mindestens 3 aromatische Kerne und eine Funktionalität von mindestens 3 aufweisen, besteht, oder Mischungen aus zwei oder drei der vor-genannten Diphenylmethandiisocyanate, oder Roh-MDI, welches bei der Herstellung von MDI anfällt, oder bevorzugt Mischungen aus mindestens einem Oligomer des MDI und mindestens einem der vorgenannten niedermolekularen MDI-Derivate 2,2'-MDI, 2,4'-MDI oder 4,4'-MDI (auch als polymeres MDI bezeichnet).Üblicherweise werden die Isomeren und Homologen des MDI durch Destillation von Roh-MDI erhalten.

Vorzugsweise enthält polymeres MDI neben zweikernigem MDI ein oder mehrere mehrkernige Kondensationsprodukte des MDI mit einer Funktionalität von mehr als 2, insbesondere 3 oder 4 oder 5. Polymeres MDI ist bekannt und wird häufig als Polyphenylpolymethylenpolyisocyanat bezeichnet.

Die mittlere Funktionalität eines Polyisocyanates, welches polymeres MDI enthält, kann im Bereich von ungefähr 2,2 bis ungefähr 4 variieren, insbesondere von 2,4 bis 3,8 und insbesondere von 2,6 bis 3,0. Eine solche Mischung von MDI-basierten mehrfunktionellen Isocyanaten mit unterschiedlichen Funktionalitäten ist insbesondere das Roh-MDI, das bei der Herstellung von MDI als Zwischenprodukt erhalten wird.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat^{®} M20 oder Lupranat^{®} M50 vertrieben.

Vorzugsweise enthält die Komponente (a) mindestens 70, besonders bevorzugt mindestens 90 und insbesondere 100 Gew.-%, bezogen auf das Gesamtgewicht der Komponente (a), ein oder mehrere Isocyanate, ausgewählt aus der Gruppe, bestehend aus 2,2'-MDI, 2,4'-MDI, 4,4'-MDI und Oligomeren des MDI. Dabei beträgt der Gehalt an oligomerem MDI vorzugsweise mindestens 20 Gew.-%, besonders bevorzugt größer 30 bis kleiner 80 Gew.-%, bezogen auf das Gesamtgewicht der Komponente (a).

Die Verbindungen mit mindestens zwei gegenüber Isocyanat reaktiven Wasserstoffatomen (b) umfassen mindestens ein Polyetheralkohol (b1), hergestellt durch Alkoxylierung eines Starters oder einer Startermischung mit einer mittleren Funktionalität von 4 bis 8 und einer Hydroxylzahl im Bereich zwischen 300 und 600 mg KOH/g, mindestens ein aromatisches Mannichkondensat (b2), das alkoxyliert sein kann, herstellbar durch Umsetzung einer aromatischen Verbindung, die an einem aromatischen Ring mindestens eine Hydroxylgruppe und/oder mindestens eine - NHR - Gruppe trägt, wobei R für einen beliebigen organischen Rest oder für Wasserstoff steht, einem oder mehreren Aldehyden und/oder Ketonen und einem oder mehreren primären oder sekundären Aminen und mindestens ein aromatisches Polyesterpolyol (b3). Weiter kann die Komponente (b) Kettenverlängerungs- und/oder Vernetzungsmittel (b4), mindestens ein Polyetheralkohol mit einer Funktionalität von 2 bis 4 und einer Hydroxylzahl von 100 bis weniger als 300 mg KOH/g (b5), sowie weitere in der Polyurethanchemie gängige Verbindungen mit mindestens zwei gegenüber Isocyanaten reaktiven Wasserstoffatomen enthalten, die nicht unter die Definition der Verbindungen (b1) bis (b5) fallen. Solche weiteren Verbindungen mit gegenüber Isocyanat reaktiven Wasserstoffatomen sind bekannt und beispielsweise beschrieben im Kunststoffhandbuch, Band 7, "Polyurethane" Carl-Hanser-Verlag München, 3. Auflage, 1993 Kapitel 3.1 oder 6.1.1.

Vorzugsweise sind in der Komponente (b) neben den Komponenten (b1) bis (b5) weniger als 20 Gew.-%, besonders bevorzugt weniger als 10 Gew.-%, jeweils bezogen auf das Gesamtgewicht der Komponente (b), und insbesondere keine weiteren Verbindungen mit mindestens zwei mit Isocyanatgruppen reaktiven Wasserstoffatomen enthalten. Dabei beträgt die mittlere Funktionalität der Komponente (b) vorzugsweise 2,5 bis 6,0, besonders bevorzugt 3,0 bis 4,5, und die Hydroxylzahl vorzugsweise 250 bis 450 mg KOH/g.

In einer besonders vorteilhaften Ausführungsform besteht die Komponente (b) aus einem Gemisch aus 20 bis 60 Gew.-%, insbesondere 30 bis 50 Gew.-%, eines oder mehrerer Polyetheralkohole (b1), größer 5 bis kleiner 20 Gew.-%, insbesondere 6 bis 18 Gew.-%, bevorzugt 7 bis 16 Gew.-% eines oder mehrerer aromatischen Mannichkondensate in alkoxylierter oder unalkoxylierter Form (b2), 20 bis 60 Gew.-%, insbesondere 30 bis 50 Gew.-%, eines aromatischen Polyesterpolyols (b3), jeweils bezogen auf die Komponenten (b1) bis (b3).

In einer mehr bevorzugten Ausführungsform enthält die Komponente (b) 20 bis 60 Gew.-%, insbesondere 30 bis 50 Gew.-%, eines oder mehrerer Polyetheralkohole (b1), größer 5 bis kleiner 20 Gew.-%, insbesondere 6 bis 18 Gew.-%, bevorzugt 7 bis 16 Gew.-% eines oder mehrerer aromatischen Mannichkondensate in alkoxylierter oder unalkoxylierter Form (b2), 20 bis 60 Gew.-%, insbesondere 30 bis 50 Gew.-%, eines oder mehrerer aromatischen Polyesterpolyole (b3), 0 bis 15 Gew.-%, bevorzugt 0 bis 12 Gew.-% und insbesondere 3 bis 10 Gew.-% Kettenverlängerer und/oder Vernetzungsmittel (b4) sowie 0 bis 20 Gew.-%, vorzugsweise 0 bis 15 Gew.-% und insbesondere 3 bis 12 Gew.-% eines oder mehrerer Polyetheralkohole (b5), jeweils bezogen auf die Summe der Komponenten (b1) bis (b5).

Die Polyetheralkohole b1) werden üblicherweise durch Anlagerung von Alkylenoxiden an H-funktionelle Startsubstanzen hergestellt. Dieses Verfahren ist allgemein bekannt und üblich für die Herstellung derartiger Produkte.

Als Startsubstanzen können Alkohole oder Amine eingesetzt werden. Als Amine können aliphatische Amine, wie Ethylendiamin eingesetzt werden. In einer anderen Ausführungsform der Erfindung können aromatische Amine, insbesondere Toluylendiamin (TDA) oder Gemische aus Diphenylmethandiamin und Polyphenylenpolymethylenpolyaminen eingesetzt werden. Vorzugsweise enthält die Komponente b) maximal 65 Gew.-%, bevorzugt maximal 40 Gew.-%, jeweils bezogen auf das Gewicht der Komponente b), Polyetheralkohole auf Basis aromatischer Amine.

In einer besonders bevorzugten Ausführungsform der Erfindung enthält die Komponente b) keine Polyetheralkohole auf Basis aliphatischer oder aromatischer Amine.

Zur Herstellung der Polyetheralkohole b1) sind somit als H-funktionelle Startsubstanzen mehrfunktionelle Alkohole bevorzugt.

Dabei handelt es sich insbesondere um 2- bis 8-funktionelle Alkohole. Beispiele hierfür sind Glykole, wie Ethylenglykol oder Propylenglykol, Glyzerin, Trimethylolpropan, Pentaerythrit, sowie Zuckeralkohole, wie Saccharose oder Sorbit, beispielsweise als Mischungen von unterschiedlichen Alkoholen untereinander. Insbesondere die festen Startsubstanzen wie Saccharose und Sorbit werden häufig mit flüssigen Startsubstanzen, wie Glykolen oder Glyzerin, gemischt. Als Funktionalität der Startersubstanzen wird dabei eine zahlengemittelte Funktionalität gewählt.

Zur Herstellung der Polyole b1) werden bevorzugt Mischungen aus hochfunktionellen Alkoholen, und den bereits genannten bei Raumtemperatur flüssigen Alkoholen, insbesondere Glyzerin, eingesetzt. Als hochfunktionelle Alkohole werden bevorzugt Zuckerverbindungen wie Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin eingesetzt. Besonders bevorzugt sind Zuckeralkohole, insbesondere Saccharose oder Sorbit.

Es hat sich gezeigt, dass die Verwendung von mit Sorbit gestarteten Polyetheralkoholen Vorteile bei der Verarbeitung und bei den Eigenschaften der Schaumstoffe bringt. So kommt es zu einer besseren Aushärtung und einer verbesserten Druckfestigkeit.

Als Alkylenoxide werden vorzugsweise Ethylenoxid, Propylenoxid oder Mischungen aus diesen Verbindungen eingesetzt. Besonders bevorzugt ist der Einsatz von reinem Propylenoxid.

Die Anlagerung der Alkylenoxide an die Startsubstanz erfolgt vorzugsweise in Anwesenheit von Katalysatoren. Zumeist werden als Katalysatoren basische Verbindungen eingesetzt, wobei die Oxide und insbesondere die Hydroxide von Alkali- oder Erdalkalimetallen die größte technische Bedeutung haben. Zumeist wird Kaliumhydroxid als Katalysator eingesetzt.

In einer Ausführungsform der Erfindung werden Amine als Katalysatoren zur Herstellung der Polyetheralkohole (b1) eingesetzt. Dabei handelt es sich vorzugsweise um Amine mit mindestens einer tertiären Aminogruppe, Imidazole, Guanidine oder deren Derivate. Bevorzugt haben diese aminischen Katalysatoren mindestens eine mit Alkylenoxiden reaktive Gruppe, beispielsweise einer primären oder sekundären Aminogruppe oder, besonders bevorzugt, eine Hydroxylgruppe.

Das erfindungsgemäße Polyetherol (b1) weist eine Hydroxylzahl von 300 und 600 mg KOH/g, vorzugsweise 350 bis 550 mg KOH/g auf.

Als ein aromatisches Mannichkondensat (b2), das alkoxyliert sein kann, wird ein Mannichkondensat eingesetzt, herstellbar durch Umsetzung einer aromatischen Verbindung, die an einem aromatischen Ring mindestens eine Hydroxylgruppe und/oder mindestens eine -NHR - Gruppe trägt, wobei R für einen beliebigen organischen Rest, beispielsweise einen Alkylrest, oder für Wasserstoff steht, einem oder mehreren Aldehyden und/oder Ketonen und einem oder mehreren primären oder sekundären Amine.

Beispiele für aromatische Verbindungen, die an einem aromatischen Ring mindestens eine Hydroxylgruppe und/oder mindestens eine -NHR- Gruppe trägt sind Phenol, ortho-, para-, meta-Kresol, Ethylphenol, Nonylphenol, Dodecylphenol, para-Phenylphenol, 2-Chlorphenol, 2,6-Dichlorphenol, 2 Bromphenol, 2-Brom-6-cyclohexylphenol, para-Nitrophenol, 3,5-Dimethylphenol, para-Isopropylphenol, β-Naphtol, Hydroxyanthrazen, substituierte s-Triazin, Verbindungen enthaltend mindestens eine Amino-Gruppe am Triazin-Ring wie z.B. Melamin, Ammelin, Ammelid, Guanamin und Benzoguanamin, sowie die verschiedenen Bisphenole einschließlich 2,2-Bis-(4-hydroxyphenyl)-propan (Bisphenol A). Bevorzugt sind Phenol, Monoalkylphenole mit 1 bis 10 Kohlenstoffatomen und Bisphenol A, besonders bevorzugte Verbindungen sind Bisphenol A und Nonylphenol.

Beispiele für die Aldehyde und/oder Ketone, die sich zur Herstellung des Mannichkondensats (b2) eignen, sind Formaldehyd, Acetaldehyd, Benzaldehyd, Cyclohexanon, Acetophenon, Indanon, Acetylnaphtalen, sowie 1- und 2-Tetralon, besonders bevorzugt verwendet wird Formaldehyd.

Beispiele für die primären oder sekundären Amine, die sich zur Herstellung des Mannichkondensats (b2) eignen, sind Monoethanolamin, Diethanolamin, Isopropanolamin, Diisopropanolamin, Hydroxyethylamin, Ethanolisopropanolamin, Ethanol-2-hydroxybutylamim, Isopropanol-2-hydroxybutylamin, Isopropanol-2-hydroxyhexylamin, Ethanol-2-hydroxyhexylamin, Bis-(2-hydroxypropyl)-amin, n-Hydroxyethylpiperazin, N-Hydroxybutylamin, N-Hydroxyethyl-2,5-dimethylpiperazin, besonders bevorzugt ist Diethanolamin.

Die im Rahmen von Komponente (b2) eingesetzten Mannichkondensate können auch alkoxyliert sein. Die Alkoxylierung erfolgt nach bekannten Verfahren, wie sie bereits bei der Herstellung der Komponente (b1) beschrieben wurden. Bevorzugte Alkylenoxide sind hier Ethylenoxid, 1,2-Propylenoxid, 1,3-Propylenoxid, 1,2- bzw. 2,3-Butylenoxid, Tetrahydrofuran und Styroloxid, vorzugsweise Ethylenoxid und 1,2-Propylenoxid, insbesondere 1,2-Propylenoxid. Die Alkylenoxide können einzeln, alternierend nacheinander oder als Mischungen verwendet werden. In einer besonders bevorzugten Ausführungsform beträgt der Anteil an 1,2-Propylenoxid, bezogen auf das Gesamtgewicht an Alkylenoxid, das zur Alkoxylierung des Mannichkondensats b2) eingesetzt wird, mindestens 50 Gew.-%, vorzugsweise mindestens 80 Gew.-%, besonders bevorzugt mindestens 90 Gew.-% und insbesondere 100 Gew.-%.

Die im Rahmen von Komponente (b2) eingesetzten aromatischen Mannichkondensatpolyole weisen vorzugsweise eine Funktionalität von 2 bis 6 und besonders bevorzugt von 3 bis 5 auf. Die OH Zahl der aromatischen Mannichkondensatpolyole (b2) beträgt vorzugsweise von 200 bis 650 und besonders bevorzugt von 300 bis 550 mg KOH/g.

In einer bevorzugten Ausführungsform ist die Mannichbase aufgebaut aus den aromatischen Verbindungen p-Nonylphenol und/oder Phenol und/oder Bisphenol A, den sekundären Aminen Diethanolamin und/oder Diisopropanolamin und Formaldehyd. In einer besonders bevorzugten Ausführungsform ist die beschriebene Mannichbase alkoxyliert.

Erfindungsgemäß enthält Komponente (b) mindestens ein aromatisches Polyesterpolyol (b3). Geeignete Polyesterpolyole (b3) können vorzugsweise aus aromatischen Dicarbonsäuren, oder Gemischen aus aromatischen und aliphatischen Dicarbonsäuren, besonders bevorzugt ausschließlich aus aromatischen Dicarbonsäuren und mehrwertigen Alkoholen hergestellt werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden.

Als aromatische Dicarbonsäuren bzw. als aromatische Dicarbonsäurederivate werden vorzugsweise Phthalsäure, Phthalsäureanhydrid, Terephthalsäure und/oder Isophthalsäure im Gemisch oder alleine verwendet, bevorzugt Verwendung finden Phthalsäure, Phthalsäureanhydrid und Terephthalsäure. Besonders bevorzugt ist die Verwendung von Terephthalsäure oder Dimethylterephthalat, im Speziellen Terephthalsäure. Aliphatische Dicarbonsäuren können mit aromatischen Dicarbonsäuren in untergeordneter Rolle im Gemisch verwendet werden. Beispiele für aliphatische Dicarbonsäuren sind Bernsteinsäure, Glutarsäure, Adipinsäure, Korksäure, Azelainsäure, Sebazinsäure, Decandicarbonsäure, Maleinsäure und Fumarsäure.

Beispiele für mehrwertige Alkohole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin, Trimethylolpropan und Pentaerythritol, bzw. deren Alkoxylate. Vorzugsweise verwendet werden Ethylenglycol, Diethylenglykol, Propylenglycol, Glycerin, Trimethylolpropan, bzw. deren Alkoxylate oder Mischungen aus mindestens zwei der genannten Polyole.

In einer speziellen Ausführungsform der Erfindung wird als mehrwertiger Alkohol auch ein Polyetheralkohol verwendet, welches ein Umsetzungsprodukt von Glycerin und oder Trimethylolpropan mit Ethylenoxid und/ oder Propylenoxid, bevorzugt mit Ethylenoxid ist, wobei die OH-Zahl des Polyetheralkohols im Bereich zwischen 500 bis 750 mg KOH/g liegt. Hierdurch ergibt sich eine verbesserte Lagerstabilität der Komponente (b3).

Zur Herstellung der Polyesterpolyole (b3) kommen neben den aromatischen Dicarbonsäuren oder deren Derivate und der mehrwertigen Alkohole vorzugsweise auch mindestens einer Fettsäure oder ein Fettsäurederivat, vorzugsweise einer Fettsäure, zum Einsatz.

Die Fettsäuren können Hydroxylgruppen enthalten. Weiterhin können die Fettsäuren Doppelbindungen enthalten.

In einer Ausführungsform der Erfindung enthält die Fettsäure vorzugsweise keine Hydroxylgruppen.

Der mittlere Fettsäuregehalt der Komponenten (b3) ist dabei vorzugsweise größer als 1 Gew.-%, bevorzugt größer als 2,5 Gew.-%, bevorzugt größer als 4 Gew.-% und besonders bevorzugt größer als 5 Gew.-% bezogen auf das Gewicht der Komponenten b3).

Der mittlere Fettsäuregehalt der Komponente (b3) ist vorzugsweise kleiner als 30 Gew.-%, bevorzugt kleiner als 20 Gew.-% bezogen auf das Gesamtgewicht der Komponenten b3).

Vorzugsweise ist die Fettsäure oder das Fettsäurederivat eine Fettsäure oder ein Fettsäurederivat auf Basis nachwachsender Rohstoffe, ausgewählt aus der Gruppe bestehend aus Rizinusöl, Polyhydroxyfettsäuren, Ricinolsäure, Hydroxyl-modifizierten Ölen, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Hydroxyl-modifizierten Fettsäuren und Fettsäureestern basierend auf Myristoleinsäure, Palmito-leinsäure, Ölsäure, Vaccensäure, Petroselinsäure, Gadoleinsäure, Erukasäure, Nervonsäure, Linolsäure, Linolensäure, Stearidonsäure, Arachidonsäure, Timno-donsäure, Clupanodonsäure und Cervonsäure.

Vorzugsweise wird als Fettsäure Ölsäure eingesetzt.

Zur Herstellung der Polyesterpolyole (b3) können die aliphatischen und aromatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas wie Stickstoff in der Schmelze bei Temperaturen von 150 bis 280°C, vorzugsweise 180 bis 260°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den oben genannten Temperaturen bis zu einer Säurezahl von 80 bis 20, vorzugsweise 40 bis 20, unter Normaldruck und anschließend unter einem Druck von kleiner als 500 mbar, vorzugsweise 40 bis 400 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyesterpolyole (b3) werden die organischen Polycarbonsäuren und/oder - derivate und mehrwertigen Alkohole vorteilhafterweise im Molverhältnis von 1 : 1 bis 2,3, vorzugsweise 1 : 1,05 bis 2,2 und besonders bevorzugt 1 : 1,1 bis 2,1 polykondensiert.

Vorzugsweise weist das Polyesterpolyol (b3) eine zahlengewichtete mittlere Funktionalität von größer oder gleich 2, bevorzugt von größer als 2, besonders bevorzugt von größer als 2,2 und insbesondere von größer als 2,3 auf, was zu einer höheren Vernetzungsdichte des damit hergestellten Polyurethans und damit zu besseren mechanischen Eigenschaften des Polyurethanschaums führt. Besonders bevorzugt ist die zahlengemittelte Funktionalität des Polyesterpolyols (b3) kleiner als 4, insbesondere kleiner als 3.

Die erhaltenen Polyesterpolyole (b3) weisen im Allgemeinen ein zahlenmittleres Molekulargewicht von 200 bis 2000 g/mol, vorzugsweise 300 bis 1000 g/mol und insbesondere 400 bis 700 g/mol auf. Die OH Zahl der Polyesterpolyole (b3) beträgt vorzugsweise 100 bis 800, besonders bevorzugt von 600 bis 150 und insbesondere von 400 bis 200 mg KOH/g.

Weiter kann die Komponente (b) Kettenverlängerungs- und/oder Vernetzungsmittel (b4) enthalten, beispielsweise zur Modifizierung der mechanischen Eigenschaften, z. B. der Härte. Als Kettenverlängerungs- und/oder Vernetzungsmittel verwendet werden Diole und/oder Triole sowie Aminoalkohole mit Molekulargewichten kleiner als 280 g/mol, vorzugsweise 62 bis 250 mg KOH/g, mehr bevorzugt 62 bis 200 mg KOH/g, weiter bevorzugt 62 bis 150 g/mol und insbesondere von 60 bis 130g/mol. In Betracht kommen beispielsweise aliphatische, cycloaliphatische und/oder araliphatische Diole mit 2 bis 8, vorzugsweise 2 bis 6 Kohlenstoffatomen, wie z. B. Ethylenglykol, 1,2-Propylenglycol, Diethylenglycol, Dipropylenglycol, 1,3-Propandiol, 1,4-Butandiol, 1,6-Hexandiol, o-, m-, p-Dihydroxycyclohexan, Bis-(2-hydroxy-ethyl)-hydrochinon. Ebenso in Betracht kommen aliphatische und cycloaliphatische Triole wie Glycerin, Trimethylolpropan und 1,2,4- und 1,3,5-Trihydroxycyclohexan.

Sofern zur Herstellung der Polyurethan-Hartschaumstoffe Kettenverlängerungsmittel, Vernetzungsmittel oder Mischungen davon Anwendung finden, werden diese zweckmäßigerweise in einer Menge von 0 bis 15 Gew.-%, vorzugsweise von 0 bis 5 Gew.-%, bezogen auf das Gesamtgewicht der Komponente (B) eingesetzt. Vorzugsweise enthält die Komponente (B) weniger als 2 Gew.-% und besonders bevorzugt weniger als 1 Gew.-% und insbesondere kein Kettenverlängerungs- und/oder Vernetzungsmittel (b4).

Als Polyetheralkohol (b5) kann ein Polyetheralkohol mit einer Funktionalität von 2 bis 4 und einer OH-Zahl von 100 bis kleiner als 300 mg KOH/g eingesetzt werden. Polyetheralkohole (b5) können analog zu den Polyetheralkoholen (b1) hergestellt werden, wobei als Startermoleküle 2 bis 4-funktionelle Verbindungen eingesetzt werden. Beispiele für Startermoleküle, die zur Herstellung der Polyetheralkohole (b5) eingesetzt werden können sind Hydroxylgruppen- oder Amingruppenhaltige Verbindungen, beispielsweise ausgewählt aus der Gruppe, bestehend aus Ethylenglycol, Diethylenglycol, Glycerin, Trimethylolpropan, Pentaerythrit, Methylamin, Ethylamin, Isopropylamin, Butylamin, Benzylamin, Anilin, Toluidin, Toluoldiamin (TDA), Naphtylamin, Ethylendiamin, 4,4'-Methylendianilin, 1,3,-Propandiamin, 1,6-Hexandiamin, Ethanolamin, Diethanolamin, Triethanolamin sowie andere zwei bis 4-Wertige Alkohole oder ein oder zweiwertige Amine sowie beleibigen Mischungen daraus. Vorzugsweise eingesetzt werden Ethylenglycol, Diethylenglycol, Glycerin, Trimethylolpropan und/oder Pentaerythrit.

Im Rahmen der Erfindung soll als Funktionalität der Polyetheralkohole die theoretische Funktionalität, ausgehend von der Funktionalität der Startermoleküle angenommen werden. Werden Mischungen aus Startermolekülen mit unterschiedlicher Funktionalität eingesetzt, können gebrochenzahlige Funktionalitäten erhalten werden. Einflüsse auf die Funktionalität, beispielsweise durch Nebenreaktionen, werden bei der nominalen Funktionalität nicht berücksichtigt.

In einer bevorzugten Ausführungsform der Erfindung wird zusätzlich ein Flammschutzmittel c) verwendet. Das Flammschutzmittel c) wird vorzugsweise in einer Menge von 10 bis 45 Gew.-%, besonders bevorzugt 20 bis 45 und insbesondere 22 bis 30 Gew.-%, bezogen auf das Gesamtgewicht der Komponenten b) und c), eingesetzt.

Das Flammschutzmittel c) kann mit Isocyanatgruppen reaktive Wasserstoffatome enthalten. In einer bevorzugten Ausführungsform der Erfindung enthält das Flammschutzmittel keine mit Isocyanatgruppen reaktiven Wasserstoffatome.

Vorzugsweise werden Flammschutzmittel c) eingesetzt, die mindestens ein Phosphoratom im Molekül enthalten.

Dabei kann es sich vorzugsweise um die unten näher charakterisierten Produkte handeln.

Eine bevorzugte Gruppe sind Phosphor enthaltende Verbindungen mit einem Molekulargewicht kleiner als 400 g/mol, im speziellen einem Phosphor-Atom im Molekül. Bevorzugt sind Phosphonate und/oder Phosphate. Besonders bevorzugt werden Phosphate und Phosphonate ausgewählt aus der Gruppe, enthaltend Diethylethanphosphonat (DEEP), Tris(2-chlorisopropyl)phosphat (TCPP), Dimethylpropylphosphonat (DMPP) und Triethylphosphat (TEP), besonders bevorzugt aus der Gruppe, enthaltend TCPP und (TEP) eingesetzt. Diese Verbindungen werden vorzugsweise in einer Menge von 5 bis 40 Gew.-%, bezogen auf Summe der Massen von b) und d) eingesetzt.

Als Treibmittel (d) können chemische und physikalische Treibmittel eingesetzt werden. Treibmittel (d) enthaltend dabei mindestens einen aliphatischen oder cycloaliphatischen Kohlenwasserstoff mit 4 bis 8 Kohlenstoffatomen.

Chemische Treibmittel sind Verbindungen, die mit Isocyanatgruppen unter Abspaltung von Gasen, insbesondere Kohlendioxid bzw. Kohlendioxid und Kohlenmonoxid, reagieren. Zumeist handelt es sich um Wasser und/oder Ameisensäure, vorzugsweise um Wasser.

An Stelle von oder in Kombination mit den chemischen Treibmitteln können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50°C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrig siedende Alkane und Fluoralkane.

Die Treibmittel werden zumeist ausgewählt aus der Gruppe, enthaltend Wasser, Ameisensäure, Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan., wobei die Treibmittel (d) mindestens einen aliphatischen oder cycloaliphatischen Kohlenwasserstoff mit 4 bis 8 Kohlenstoffatomen enthalten.

Beispielhaft seien als physikalische Treibmittel genannt Propan, n-Butan, iso- und Cyclobutan , n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,3,3,3-Pentafluorpropen, 1,1,1,3,3-Pentafluorbutan, 1,1,1,3,3-Pentafluorpropan, 1,1,1,2-Tetrafluorethan, 1,1,1,2,3-Pentafluorpropen, 1-Chlor-3,3,3-trifluorpropen, Difluorethan und Heptafluorpropan. Die genannten physikalischen Treibmittel können allein oder in beliebigen Kombinationen untereinander eingesetzt werden.

Besonders bevorzugte physikalische Treibmittel sind Fluoralkane und/oder Kohlenwasserstoffe, besonders bevorzugt aliphatische oder cycloaliphatische Kohlenwasserstoffe mit 4 bis 8 Kohlenstoffatomen und insbesondere Pentan, wie n-Pentan oder Iso-Pentan sowie Mischungen aus n-Pentan und Iso-Pentan.

Die Treibmittelkomponente (d) wird üblicherweise in einer Menge von 2 bis 30 Gew.-%, bevorzugt 2 bis 20 Gew.-%, besonders bevorzugt 2 bis 15 Gew.-%, bezogen auf das Gesamtgewicht der Komponenten b) bis e) eingesetzt.

In einer bevorzugten Ausführungsform enthält das Treibmittelgemisch d) ausschließlich Kohlenwasserstoffe als physikalisches Treibmittel, besonders bevorzugt in Kombination mit dem chemischen Treibmittel Wasser. Besonders bevorzugte Kohlenwasserstoffe sind n-Pentan, Cyclopentan, Iso-Pentan sowie Mischungen der Isomeren. Insbesondere wird eine Mischung aus n-Pentan und Iso-Pentan als physikalisches Treibmittel c) verwendet.

Als Katalysatoren (e) zur Herstellung der Polyurethan-Hartschaumstoffe werden insbesondere Verbindungen verwendet, die die Reaktion der reaktiven Wasserstoffatome, insbesondere Hydroxylgruppen, enthaltenden Verbindungen der Komponenten (b) mit den Polyisocyanaten (a) stark beschleunigen.

Zweckmäßigerweise verwendet werden basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N,N,N,N-Tetramethylhexandiamin-1,6, Pentamethyldiethylentriamin, Bis(2-dimethylaminoethyl)ether, Dimethylpiperazin, N-Dimethylaminoethylpiperidin, 1,2-Dimethylimidazol, 1-Azabicyclo-(2,2,0)-octan, 1,4.Diazabicyclo.(2,2,2).octan(Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazine, z.B. N,N',N"-Tris-(dimethylaminopropyl)-s-hexahydrotriazin, und Triethylendiamin. Als Katalysatoren kommen ferner in Betracht: Amidine, wie 2,3-Dimethyl-3,4,5,6-tetrahydropyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, Alkalicarboxylate sowie Alkalisalze von langkettigen Fettsäuren mit 10 bis 20 C-Atomen und gegebenenfalls seitenständigen OH-Gruppen.

Vorzugsweise verwendet werden 0,001 bis 10 Gew.-Teile, besonders bevorzugt 0,01 bis 7 Gew.-Teile, im speziellen 0,1 bis 5 Gew.-Teile Katalysator bzw. Katalysatorkombination bezogen auf 100 Gew.-Teile der Komponente (b).

Es besteht auch die Möglichkeit, die Reaktionen ohne Katalyse ablaufen zu lassen. In diesem Fall wird die katalytische Aktivität von mit Aminen gestarteten Polyolen ausgenutzt.

Ebenso kommen Katalysatoren für die Trimerisierungsreaktion der NCO-Gruppen untereinander in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu einer stärkeren Vernetzung im Schaum und zu einer höheren Flammfestigkeit als die Urethan-Bindung.

Bevorzugt wird mindestens ein basischer Polyurethankatalysator verwendet, vorzugsweise aus der Gruppe der tertiären Amine. Besonders bevorzugt ist der Einsatz von Dimethylcyclohexylamin, Triethylamin, Tetramethylhexandiamin, N,N',N"-Tris-(dialkylaminopropyl)-hexahydrotriazine oder 1,4.Diazabicyclo.-(2,2,2)-octan. Insbesondere enthält der Katalysator Dimethylcyclohexylamin. Bevorzugt wird zusätzlich mindestens ein Katalysator aus der Gruppe der Trimerisierungskatalysatoren verwendet, vorzugsweise Amoniumionen- oder Alkalimetallsalze, besonders bevorzugt Ammonium- oder Alkalimetallcarboxylate. Speziell wird Kaliumacetat als einziger Trimerisierungskatalysator verwendet.

Besonders bevorzugt wird als Katalysator (e) ein Katalysatorgemisch eingesetzt, enthaltend tertiäres Amin als Polyurethankatalysator und ein Metall- oder Ammoniumcarboxylat, beispielsweise Alkalimetallcarboxylat, als Trimerisierungskatalysator.

Der Reaktionsmischung zur Herstellung der Polyurethan-Hartschaumstoffe können gegebenenfalls noch weitere Hilfsmittel und/oder Zusatzstoffe (f) zugesetzt werden. Genannt seien beispielsweise oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung, falls eingesetzt, vorteilhafterweise in Mengen von 0,5 bis 50 Gew.-%, vorzugsweise 1 bis 40 Gew.-%, bezogen auf das Gewicht der Komponenten (b) bis (f), zugegeben.

Nähere Angaben über die oben genannten üblichen Hilfs- und Zusatzstoffe (f) sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, 3. Auflage, 1993 zu entnehmen.

Zur Herstellung der Polyurethan-Hartschaumstoffe werden die Komponenten (a) bis (f) zu einer Reaktionsmischung vermischt. Vorzugsweise kann dabei im 2-Komponentenverfahren gearbeitet werden, bei den die Komponenten (b), (c), (d), (e) und gegebenenfalls (f) zu einer Polyolkomponente vermischt werden und anschließend mit dem Polyisocyanat (a) vermischt werden. Dieses Zweikomponentenverfahren hat sich in der Praxis als bevorzugt erwiesen. Dabei wird im Rahmen der vorliegenden Erfindung unter einer Reaktionsmischung die Mischung der Isocyanate (a) und der gegenüber Isocyanat reaktiven Verbindungen (b) bei Reaktionsumsätzen kleiner 90 %, bezogen auf die Isocyanatgruppen, bezeichnet.

Im erfindungsgemäßen Verfahren werden Polyisocycanate (a) und die Polyolkomponente bestehend aus den Komponenten: (b), (c), (d), (e) und gegebenenfalls (f) in solchen Mengen zur Umsetzung gebracht, dass der Isocyanatindex in einem Bereich zwischen 160 bis 230 und im speziellen zwischen 180 und 220 liegt. Der Isocyanatindex ist das molare Verhältnis von Isocyanatgruppen zu mit Isocyanatgruppen reaktiven Gruppen multipliziert mit 100.

Die Ausgangskomponenten werden bei einer Temperatur von 15 bis 90 °C, vorzugsweise von 20 bis 60 °C, insbesondere von 20 bis 45 °C gemischt. Das Reaktionsgemisch kann mit Hoch- oder Niederdruckdosiermaschinen in geschlossene Stützwerkzeuge gegossen werden. Nach dieser Technologie werden z.B. diskontinuierliche Sandwichelemente gefertigt.

Bevorzugt werden die erfindungsgemäßen Hartschaumstoffe auf kontinuierlich arbeitenden Doppelbandanlagen hergestellt. Beim Doppelbandverfahren werden mit einer Hochdruckmaschine die Polyol- und die Isocyanatkomponente dosiert und in einem Mischkopf vermischt. Dem Polyolgemisch können zuvor mit separaten Pumpen Katalysatoren und/oder Treibmittel zu dosiert werden. Das Reaktionsgemisch wird kontinuierlich auf die untere Deckschicht aufgetragen. Die untere Deckschicht mit dem Reaktionsgemisch und die obere Deckschicht laufen in das Doppelband ein, in dem das Reaktionsgemisch aufschäumt und aushärtet. Nach Verlassen des Doppelbandes wird der endlose Strang in die gewünschten Abmessungen zerschnitten. Auf diese Weise können Sandwichelemente mit metallischen Deckschichten oder Dämmelemente mit flexiblen Deckschichten hergestellt werden.

Die nach dem erfindungsgemäßen Verfahren hergestellten Polyurethan-Hartschaumstoffe weisen eine Dichte von 0,02 bis 0,75 g/cm³, vorzugsweise von 0,025 bis 0,24 g/cm³ und insbesondere von 0,03 bis 0,1 g/cm³ auf. Besonders eignen sie sich als Isolationsmaterial im Bau- oder Kühlsektor, z.B. als Zwischenschicht für Sandwichelemente. Erfahrungsgemäß treten Oberflächenstörungen zwischen Schamoberflächen und der im Doppelbandverfahren unten laufenden Deckschicht besonders gehäuft bei der Herstellung dünnerer Sandwichelemente auf. Die erfindungsgemäßen Polyolkomponenten ermöglichen somit, neben der verbesserten Schaummechanik eine deutliche Verbesserung der Schaumqualität. Als vorteilhaft hat es sich erwiesen, das erfindungsgemäße Verfahren zur Herstellung von Polyurethan-Hartschaumstoff-Verbundelementen mit einer Schaumstoffdicke von 20 bis 200 mm, besonders bevorzugt 30 bis 150 mm, mehr bevorzugt 30 bis 100 mm und insbesondere 30 bis 80 mm einzusetzen. Als "Dicke" wird dabei die Schaumstoffdicke von Deckschicht zu Deckschicht verstanden.

Gegenstand der vorliegenden Erfindung ist weiter ein Polyurethan-Hartschaumstoff-Verbundelement, herstellbar nach eine erfindungsgemäßen Verfahren Die erfindungsgemäßen Polyurethan-Hartschaumstoffe zeichnen sich durch eine besonders hohe Flammwidrigkeit aus und ermöglichen daher den Einsatz von reduzierten Mengen an Flammschutzmitteln, insbesondere eine reduzierte Menge an toxischen, halogenierten Flammschutzmitteln. Vorzugsweise weisen die erfindungsgemäßen Hartschaumstoffe eine Flammenhöhe von weniger als 15 cm nach einem Test entsprechend EN-ISO 11925-2 auf.

Weiterhin erfüllen die erfindungsgemäßen PUR-Hartschaumstoffe auch bei geringen Formtemperaturen < 55 °C und ohne zusätzlichen Haftvermittlerauftrag alle notwendigen Anforderungen an eine gute Verarbeitbarkeit und Endprodukteigenschaft: Schnelle Schaumhärtung, gute Schaumanhaftung auf metallischen Deckschichten, wenig Fehlstellen auf der Schaumoberfläche, gute Druckfestigkeiten und gutes Wärmedämmvermögen. Darüber hinaus ist eine erfindungsgemäße Polyolkomponente, enthaltend die Komponenten (b), (d) und (e) phasenstabil, das heißt auch bei 2 Wochen Lagerung bei 20 °C ist die Mischung noch homogen und es tritt keine Phasenseparation auf.

Im Folgenden wird die vorliegende Erfindung im Rahmen von Beispielen verdeutlicht:

### Beispiele

Ausgangsstoffe:
Polyetherpolyol 1: Polyetheralkohol mit einer Hydroxylzahl von 490 mg KOH/g und einer mittleren Funktionalität von 4,3, hergestellt durch Propoxylierung von einer Mischung aus Saccharose und Glycerin als Starter.
Polyetherpolyol 2: Polyetherpolyol mit einer Hydroxylzahl von 188 mg KOH/g und einer Funktionalität von 2,0, hergestellt durch Ethoxylierung von Ethylenglycol als Starter.
Polyetherpolyol 3: Polyetherpolyol mit einer Hydroxylzahl von 605 mg KOH/g und einer Funktionalität von 3,0, hergestellt durch Ethoxylierung von Trimethylolpropan als Starter.
Polyesterpolyol 1: Veresterungsprodukt von Terephtalsäure, Diethylenglycol, Ölsäure und einem auf eine Hydroxylzahl von 600 mg KOH/g ethoxylierten Trimethylolpropan, mit einer Hydroxylzahl von 245 mg KOH/g und einer Funktionalität von 2,5.
Polyesterpolyol 2: Veresterungsprodukt von Terephtalsäure, Diethylenglycol, Ölsäure und einem auf eine Hydroxylzahl von 530 mg KOH/g ethoxylierten Glycerin, mit einer Hydroxylzahl von 245 mg KOH/g und einer Funktionalität von 2,5.
Mannich Polyol 1: Desmophen^{®} M530 der Firma "Covestro": Propoxyliertes Mannichkondensat aufgebaut aus Bisphenol A, Formaldehyd und Diethanolamin mit einer Hydroxylzahl von 530 mg KOH/g und einer mittleren Funktionalität von 3,0.
Mannich Polyol 2: Rokopol^{®} RF 151 der Firma "PCC Rokita": Propoxiliertes Mannichkondensat aufgebaut aus Nonylphenol, Formaldehyd und Diethanolamin mit einer Hydroxylzahl von 450 mg KOH/g.
TCPP: Tris(2-chlorisopropyl)phosphat
TEP: Triethylphosphat
Niax^{®} L 6635: Silikonhaltiger Schaumstabilisator der Firma Momentive
Katalysator A: Trimerisierungskatalysator bestehend aus 47 Gew.-% Kaliumacetat gelöst in Monoethylenglycol
Katalysator B: Dimethylcyclohexylamin
Pentan S 80/20: Mischung aus 80 Gew.-% n-Pentan und 20 Gew.-% Isopentan.
Lupranat^{®} M50: polymeres Methylendiphenyldiisocyanat (PMDI), mit einer Viskosität von ca. 500 mPa*s bei 25 °C.

Bei der Herstellung der 50 mm, 100 mm und 170 mm dicken Polyurethan-Hartschaum Verbundelemente im Doppelbandverfahren, wurden die in Tabelle 1 dargestellten, auf 20 ± 1 °C temperierten Polyolkomponenten mit Lupranat^{®} M50, welches ebenfalls auf 20 ± 1 °C temperiert wurde, umgesetzt. Die Menge an Lupranat^{®} M50 wurde stets so gewählt, dass alle hergestellten Hartschaumstoffe einen Isocyanatindex von 200 ± 10 aufwiesen.

Zur Herstellung der Verbundelemente diente als untere Deckschicht sowohl eine auf 35 ± 2 °C beheizte, 0.05 mm dicke Aluminiumfolie, als auch ein auf 37 ± 1 °C beheiztes, 0.5 mm dickes Aluminiumblech mit leichter Profilierung. Die Temperatur des Doppelbandes betrug stets 50 ± 1 °C.

Zur Herstellung der 50 mm dicken Verbundelemente wurde die Menge an Katalysator B und Wasser so ausgewählt, dass die Gelzeit der Reaktionsmischung exakt 25 Sekunden und die Kontaktzeit der Reaktionsmischung mit dem Oberband exakt 20 Sekunden betrug und der Schaum eine Gesamtdichte von 36,5 ± 1 g/l aufwies.

Zur Herstellung der 100 mm dicken Verbundelemente wurde die Menge an Katalysator B und Wasser so ausgewählt, dass die Gelzeit der Reaktionsmischung exakt 30 Sekunden und die Kontaktzeit der Reaktionsmischung mit dem Oberband exakt 24 Sekunden betrug und der Schaum eine Gesamtdichte von ebenfalls 36,5 ± 1 g/l aufwies.

Zur Herstellung der 170 mm dicken Verbundelemente wurde die Menge an Katalysator B und Wasser so ausgewählt, dass die Gelzeit der Reaktionsmischung exakt 35 Sekunden und die Kontaktzeit der Reaktionsmischung mit dem Oberband exakt 29 Sekunden betrug und der Schaum eine Gesamtdichte von 36,5 ± 1 g/l aufwies.

Bezogen auf die Komponenten a) bis f) wurde alle Einstellungen mit einem Pentan S 80/20 Anteil von 1,8 Gew.-% verarbeitet.

**Tabelle 1**

| | Vergleichs Beispiel 1 | Beispiel 1 | Vergleichs Beispiel 2 | Beispiel 2 | Vegleichs Beispiel 3 | Beispiel 3 |
|---|---|---|---|---|---|---|
| Polyetherpolyol 1 [Gew.-Teile] | 28,2 | 28,2 | 28,2 | 28,2 | 24,5 | 24,5 |
| Polyetherpolyol 2 [Gew.-Teile] | 5,5 | 5,5 | 5,5 | 5,5 | | |
| Polyetherpolyol 3 [Gew.-Teile] | | | | | 5,5 | 5,5 |
| Polyesterpolyol 1 [Gew.-Teile] | | | 38,3 | 28,3 | | |
| Polyesterpolyol 2 [Gew.-Teile] | 38,3 | 28,3 | | | 38,5 | 28,5 |
| Mannich Polyol 1 [Gew.-Teile] | | 10,0 | | 10,0 | | |
| Mannich Polyol 2 [Gew.-Teile] | | | | | | 10,0 |
| TCPP [Gew.-Teile] | 24,5 | 24,5 | 24,5 | 24,5 | 24,0 | 24,0 |
| TEP [Gew.-Teile] | | | | | 3,5 | 3,5 |
| Niax L6635 [Gew.-Teile] | 2,5 | 2,5 | 2,5 | 2,5 | 2,5 | 2,5 |
| Katalysator A [Gew.-Teile] | 1,0 | 1,0 | 1,0 | 1,0 | 1,0 | 1,0 |
| Pentan S 80/20 | 1,8 | 1,8 | 1,8 | 1,8 | 1,8 | 1,8 |
| | | | | | | |
| Elementdicke [mm] | 50 | 50 | 100 | 100 | 170 | 170 |

Für alle Beispiele und Vergleichsbeispiele wurden Probekörper der Länge 2,0 m und der Breite 1,25 m entnommen. An diesen Probekörpern wurden die nachfolgend beschriebenen Eigenschaften ermittelt.

### Die Bestimmung dieser Eigenschaften erfolgte folgendermaßen:

### Bestimmung der Querzugfestigkeit:

Aus den Probekörpern wurden weitere Prüfkörper mit den Abmessungen 100 mm x 100 mm x Sandwichdicke (50 mm, 100 mm, 170 mm) mit Hilfe einer Bandsäge entnommen. Die Prüfkörper wurden an identischen Stellen, verteilt über die Breite des Elements (Links, Mitte, Rechts) entnommen und die Querzugfestigkeit des Schaums, bzw. die Haftung zur Deckschicht entsprechend der Sandwichnorm DIN EN ISO 14509-A.1 nach EN 1607 bestimmt.

### Bestimmung der Druckfestigkeit:

Aus den Probekörpern wurden weitere Prüfkörper mit den Abmessungen 100 mm x 100 mm x Sandwichdicke (50 mm, 100 mm, 170 mm) mit Hilfe einer Bandsäge entnommen. Die Prüfkörper wurden an identischen Stellen, verteilt über die Breite des Elements (Links, Mitte, Rechts) entnommen und die Druckfestigkeit Querzugfestigkeit des Schaums entsprechend der Sandwichnorm DIN EN ISO 14509-A.2 nach EN 826 bestimmt.

### Beurteilung der Schaumoberfläche nach Abriss der unteren Deckschichten:

Nach mechanischer Entfernung der Aluminiumfolie und der Aluminiumbleche, auf welche das flüssige Reaktionsgemisch im Doppelbandverfahren direkt appliziert wird (untere Deckschicht) wurden die Schaumoberflächen visuell beurteilt und bewertet, wobei Note 1 die beste Schaumoberfläche und Note 5 die schlechteste Schaumoberfläche darstellt:

| | Aluminiumfolie | Profilblech |
|---|---|---|
| Note 1 | Optisch einwandfrei (Samthaut) | Optisch einwandfrei (Samthaut) |
| Note 2 | Kleine Schiebezonen | Kleine Schiebezonen |
| Note 3 | Lunkertiefe: < 0,2 cm | Lunkertiefe: < 0,2 cm |
| Note 4 | Lunkertiefe: 0,3 - 0,6 cm | Lunkertiefe: 0,3 - 0,6 cm |
| Note 5 | Lunkertiefe: > 0,6 cm | Lunkertiefe: > 0,6 cm |

**Tabelle 2:**

| | Vergleichs Beispiel 1 | Beispiel 1 | | Vergleichs Beispiel 2 | Beispiel 2 | | Vergleichs Beispiel 3 | Beispiel 3 |
|---|---|---|---|---|---|---|---|---|
| Gesamtdichte [g/l] | 36,2 | 35,8 | | 36,1 | 36,4 | | 37,1 | 36,3 |
| Druck [N/mm²] | 0,115 | 0,147 | | 0,118 | 0,161 | | 0,121 | 0,157 |
| Zug [N/mm²] | 0,09 | 0,17 | | 0,13 | 0,17 | | 0,08 | 0,12 |
| OF Blech | 6 | 4 | | 2 | 1 | | 1 | 1 |
| OF Folie | 5 | 3 | | 2 | 2 | | 1 | 1 |
| | | | | | | | | |

Die Ergebnisse in Tabelle 2 zeigen, dass die Zugfestigkeiten der Schäume, die entsprechend der erfindungsgemäßen Beispiele hergestellt wurden, deutlich höher sind, als die der entsprechenden Vergleichsbeispiele. Zusätzlich zeigen die Schäume aus allen Beispielen deutlich bessere Druckfestigkeit im Vergleich zu den Schäumen aus allen Vergleichsbeispielen.

Weiterhin ist die Oberflächenqualität zu beiden Deckschichten (Aluminiumfolie und Profilblech) bei dem Schaum aus Beispiel 1 gegenüber dem Schaum aus Vergleichsbeispiel 1 signifikant verbessert. Auch der Schaum aus Beispiel 2 zeigt gegenüber dem Schaum aus Vergleichsbeispiel 2 qualitative Vorteile an der Grenzfläche zum Profilblech. Erfahrungsgemäß treten Oberflächenstörungen zwischen Schamoberflächen und der im Doppelbandverfahren unten laufenden Deckschicht besonders gehäuft bei der Herstellung dünnerer Sandwichelemente auf. Die erfindungsgemäßen Polyolkomponenten, welche exemplarisch anhand der Beispiel 1, 2 und 3 beschrieben wurden, ermöglichen somit, neben der verbesserten Schaummechanik eine deutliche Verbesserung der Schaumqualität, speziell bei der Verarbeitung zu Hartschaum Verbundelementen mit Dicken ≤100 mm.

## Patentansprüche

1. Verfahren zur Herstellung von Polyurethan-Hartschaumstoff-Verbundelementen, enthaltend mindestens eine Deckschicht und eine Polyurethanhartschaumstoffschicht, bei dem man
(a) Polyisocyanate mit
(b) Verbindungen mit mindestens zwei mit Isocyanatgruppen reaktiven Wasserstoffatomen
(c) gegebenenfalls Flammschutzmittel
(d) Treibmittel, enthaltend mindestens einen aliphatischen oder cycloaliphatischen Kohlenwasserstoff mit 4 bis 8 Kohlenstoffatomen
(e) Katalysator und
(f) gegebenenfalls Hilfs- und Zusatzstoffe
zu einer Reaktionsmischung vermischt, die Reaktionsmischung auf die Deckschicht aufträgt und zum Polyurethanhartschaumstoff aushärtet,
wobei die Komponente (b) mindestens ein Polyetheralkohol (b1), hergestellt durch Alkoxylierung eines Starters oder einer Startermischung mit einer mittleren Funktionalität von 4 bis 8 und einer Hydroxylzahl von 300 und 600 mg KOH/g, mindestens ein aromatisches Mannichkondensat (b2), das alkoxyliert sein kann, herstellbar durch Umsetzung einer aromatischen Verbindung, die an einem aromatischen Ring mindestens eine Hydroxylgruppe und/oder mindestens eine -NHR - Gruppe trägt, wobei R für einen beliebigen organischen Rest oder für Wasserstoff steht, einem oder mehreren Aldehyden und/oder Ketonen und einem oder mehreren primären oder sekundären Aminen,
mindestens ein aromatisches Polyesterpolyol (b3) und
gegebenenfalls Kettenverlängerungsmittel und/oder Vernetzungsmittel enthält, wobei der Anteil an aromatischem Mannich-Kondensat größer als 5 Gew.-% bis kleiner als 20 Gew.-%, bezogen auf das Gesamtgewicht der Komponente (b) beträgt und
der Isocyanatindex beim Vermischen der Komponenten (a) bis (f) 160 bis 230 beträgt.

2. Verfahren nach Anspruch 1, **dadurch gekennzeichnet, dass** die Verbindungen mit mindestens zwei mit Isocyanatgruppen reaktiven Wasserstoffatomen (b) Kettenverlängerungs- und/oder Vernetzungsmittel (b4) enthalten.

3. Verfahren nach Anspruch 1 oder Anspruch 2, **dadurch gekennzeichnet, dass** die Verbindungen mit mindestens zwei mit Isocyanatgruppen reaktiven Wasserstoffatomen (b) mindestens einen Polyetheralkohol (b5) mit einer Funktionalität von 2 bis 4 und einer Hydroxylzahl im Bereich von 100 bis kleiner als 300 mg KOH/g enthalten.

4. Verfahren nach einem der Ansprüche 1 bis 3, **dadurch gekennzeichnet, dass** die Verbindungen mit mindestens zwei mit Isocyanatgruppen reaktiven Wasserstoffatomen (b) 20 bis 60 Gew.-%, eines oder mehrerer Polyetheralkohole (b1), größer 5 bis kleiner 20 Gew.-% eines oder mehrerer aromatischen Mannichkondensate in alkoxylierter oder unalkoxylierter Form (b2), 20 bis 60 Gew.-% eines aromatischen Polyesterpolyols (b3) und 0 bis 15 Gew.-% Kettenverlängerer und/oder Vernetzungsmittel (b4) und 0 bis 15 Gew.-% Polyetheralkohol (b5), jeweils bezogen auf das Gesamtgewicht der Komponenten (b1) bis (b5), enthalten.

5. Verfahren nach einem der Ansprüche 1 bis 4, **dadurch gekennzeichnet, dass** die Hydroxylzahl der Verbindungen mit mindestens zwei mit Isocyanatgruppen reaktiven Wasserstoffatomen (b) 150 bis 350 mg KOH/g beträgt.

6. Verfahren nach einem der Ansprüche 1 bis 5, **dadurch gekennzeichnet, dass** das aromatische Mannichkondensat (b2) 1,2-propoxyliert ist und eine OH-Zahl von 200 bis 650 mg KOH/g aufweist.

7. Verfahren nach einem der Ansprüche 1 bis 6, **dadurch gekennzeichnet, dass** das aromatische Polyesterpolyol (b3) durch Veresterung von Dicarbonsäuren oder deren Derivaten ausgewählt aus der Gruppe, bestehend aus Phthalsäure, Phthalsäurederivate, Isophthalsäure, Isophthalsäurederivate, Therephthalsäure, Terephthalsäurederivate oder deren Mischungen, mindestens einem Dialkohol und mindestens einer Fettsäure erhalten wird.

8. Verfahren nach einem der Ansprüche 1 bis 7, **dadurch gekennzeichnet, dass** der Polyesteralkohol (b3) eine OH-Funktionalität von größer als 2 bis kleiner als 4 und eine Hydroxylzahl von 200 bis 400 mg KOH/g aufweist.

9. Verfahren nach einem der Ansprüche 1 bis 8, **dadurch gekennzeichnet**, das die Polyisocyanate (a) ein oder mehrere Isocyanate, ausgewählt aus der Gruppe, bestehend aus 2,2'-MDI, 2,4'-MDI, 4,4'-MDI und Oligomeren des MDI, enthalten.

10. Verfahren nach einem der Ansprüche 1 bis 9, **dadurch gekennzeichnet, dass** der Katalysator (e) ein Metall- oder Ammoniumcarboxylat enthält.

11. Verfahren nach einem der Ansprüche 1 bis 10, **dadurch gekennzeichnet, dass** das Treibmittel (d) ausschließlich Kohlenwasserstoffe als physikalisches Treibmittel enthält.

12. Verfahren nach einem der Ansprüche 1 bis 11, **dadurch gekennzeichnet, dass** das Polyurethan-Hartschaumstoff-Verbundelement kontinuierlich nach dem Doppelbandverfahren hergestellt wird.

13. Verfahren nach einem der Ansprüche 1 bis 12, **dadurch gekennzeichnet, dass** das Polyurethan-Hartschaumstoff-Verbundelement eine Dicke von 30 bis 100 mm aufweist.

14. Polyurethan-Hartschaumstoff-Verbundelement, erhältlich nach einem Verfahren gemäß einem der Ansprüche 1 bis 13.

## Claims

1. A method for producing rigid polyurethane foam composite elements, comprising at least one outer layer and a rigid polyurethane foam layer, by mixing
(a) polyisocyanates with
(b) compounds having at least two hydrogen atoms reactive with isocyanate groups,
(c) optionally flame retardant(s),
(d) blowing agent, comprising at least one aliphatic or cycloaliphatic hydrocarbon having 4 to 8 carbon atoms,
(e) catalyst, and
(f) optionally auxiliaries and adjuvants
to form a reaction mixture, applying the reaction mixture to the outer layer, and curing it to form the rigid polyurethane foam,
where component (b) comprises at least one polyether alcohol (b1), prepared by alkoxylation of a starter or of a starter mixture having an average functionality of 4 to 8 and a hydroxyl number of 300 to 600 mg KOH/g,
at least one aromatic Mannich condensate (b2), which may have been alkoxylated, preparable by reaction of an aromatic compound which on an aromatic ring carries at least one hydroxyl group and/or at least one group -NHR, where R is any organic radical or is hydrogen, one or more aldehydes and/or ketones, and one or more primary or secondary amines,
at least one aromatic polyester polyol (b3), and optionally chain extenders and/or crosslinking agents,
the fraction of aromatic Mannich condensate being greater than 5 wt% to less than 20 wt%, based on the total weight of component (b)
and
the isocyanate index on mixing of components (a) to (f) is 160 to 230.

2. The method according to claim 1, wherein the compounds (b) having at least two hydrogen atoms reactive with isocyanate groups comprise chain extenders and/or crosslinking agents (b4).

3. The method according to claim 1 or claim 2, wherein the compounds (b) having at least two hydrogen atoms reactive with isocyanate groups comprise at least one polyether alcohol (b5) having a functionality of 2 to 4 and a hydroxyl number in the range from 100 to less than 300 mg KOH/g.

4. The method according to any of claims 1 to 3, wherein the compounds (b) having at least two hydrogen atoms reactive with isocyanate groups comprise 20 to 60 wt% of one or more polyether alcohols (b1), greater than 5 to less than 20 wt% of one or more aromatic Mannich condensates in alkoxylated or unalkoxylated form (b2), 20 to 60 wt% of an aromatic polyester polyol (b3), and 0 to 15 wt% of chain extenders and/or crosslinking agents (b4) and 0 to 15 wt% of polyether alcohol (b5), based in each case on the total weight of components (b1) to (b5).

5. The method according to any of claims 1 to 4, wherein the hydroxyl number of the compounds (b) having at least two hydrogen atoms reactive with isocyanate groups is 150 to 350 mg KOH/g.

6. The method according to any of claims 1 to 5, wherein the aromatic Mannich condensate (b2) is 1,2-propoxylated and has an OH number of 200 to 650 mg KOH/g.

7. The method according to any of claims 1 to 6, wherein the aromatic polyester polyol (b3) is obtained by esterification of dicarboxylic acids or derivatives thereof, selected from the group consisting of phthalic acid, phthalic acid derivatives, isophthalic acid, isophthalic acid derivatives, terephthalic acid, terephthalic acid derivatives, or mixtures thereof, at least one dialcohol, and at least one fatty acid.

8. The method according to any of claims 1 to 7, wherein the polyester alcohol (b3) has an OH functionality of greater than 2 to less than 4 and a hydroxyl number of 200 to 400 mg KOH/g.

9. The method according to any of claims 1 to 8, wherein the polyisocyanates (a) comprise one or more isocyanates selected from the group consisting of 2,2'-MDI, 2,4'-MDI, 4,4'-MDI and oligomers of MDI.

10. The method according to any of claims 1 to 9, wherein the catalyst (e) comprises a metal carboxylate or ammonium carboxylate.

11. The method according to any of claims 1 to 10, wherein the blowing agent (d) comprises exclusively hydrocarbons as physical blowing agent.

12. The method according to any of claims 1 to 11, wherein the rigid polyurethane foam composite element is produced continuously by the double belt process.

13. The method according to any of claims 1 to 12, wherein the rigid polyurethane foam composite element has a thickness of 30 to 100 mm.

14. A rigid polyurethane foam composite element obtainable by a method according to any of claims 1 to 13.

## Revendications

1. Procédé de fabrication d'éléments composites en mousse rigide de polyuréthane, contenant au moins une couche de couverture et une couche de mousse rigide de polyuréthane, dans lequel on mélange pour obtenir un mélange réactionnel
(a) des polyisocyanates avec
(b) des composés ayant au moins deux atomes d'hydrogène réactifs vis-à-vis des groupes isocyanate
(c) éventuellement des retardateurs de flamme
(d) des agents porogènes, contenant au moins un hydrocarbure aliphatique ou cycloaliphatique ayant 4 à 8 atomes de carbone
(e) un catalyseur et
(f) éventuellement des adjuvants et additifs,
on applique le mélange réactionnel sur la couche de couverture et on le durcit pour obtenir la mousse rigide de polyuréthane,
dans lequel le composant (b) contient au moins un polyétheralcool (b1), préparé par alcoxylation d'un amorceur ou d'un mélange amorceur ayant une fonctionnalité moyenne de 4 à 8 et un indice d'hydroxyle de 300 à 600 mg KOH/g, au moins un produit de condensation de Mannich aromatique (b2), qui peut être alcoxylé, pouvant être préparé par réaction d'un composé aromatique qui, sur un noyau aromatique, porte au moins un groupe hydroxyle et/ou au moins un groupe -NHR, R représentant un radical organique quelconque ou un hydrogène, un ou plusieurs aldéhydes et/ou cétones et une ou plusieurs amines primaires ou secondaires,
au moins un polyesterpolyol aromatique (b3) et éventuellement des prolongateurs de chaîne et/ou des agents de réticulation,
la proportion du produit de condensation de Mannich aromatique étant supérieure à 5 % en poids jusqu'à inférieure à 20 % en poids par rapport au poids total du composant (b) et
l'indice d'isocyanate, lors du mélange des composants (a) à (f), est de 160 à 230.

2. Procédé selon la revendication 1, **caractérisé en ce que** les composés ayant au moins deux atomes d'hydrogène (b) réactifs vis-à-vis des groupes isocyanate contiennent des prolongateurs de chaîne et/ou des agents de réticulation (b4).

3. Procédé selon la revendication 1 ou la revendication 2, **caractérisé en ce que** les composés ayant au moins deux atomes d'hydrogène réactifs vis-à-vis des groupes isocyanate (b) contiennent au moins un polyétheralcool (b5) ayant une fonctionnalité de 2 à 4 et un indice d'hydroxyle dans la plage de 100 à moins de 300 mg KOH/g.

4. Procédé selon l'une des revendications 1 à 3, **caractérisé en ce que** les composés ayant au moins deux atomes d'hydrogène réactifs vis-à-vis des groupes isocyanate (b) contiennent 20 à 60 % en poids d'un ou plusieurs polyétheralcools (b1), plus de 5 jusqu'à moins de 20 % en poids d'un ou plusieurs produits de condensation de Mannich aromatiques sous forme alcoxylée ou non alcoxylée (b2), 20 à 60 % en poids d'un polyesterpolyol aromatique (b3) et 0 à 15 % en poids de prolongateurs de chaîne et/ou d'agents de réticulation (b4) et 0 à 15 % en poids de polyétheralcool (b5), dans chaque cas par rapport au poids total des composants (b1) à (b5).

5. Procédé selon l'une des revendications 1 à 4, **caractérisé en ce que** l'indice d'hydroxyle des composés ayant au moins deux atomes d'hydrogène réactifs vis-à-vis des groupes isocyanate (b) est de 150 à 350 mg KOH/g.

6. Procédé selon l'une des revendications 1 à 5, **caractérisé en ce que** le produit de condensation de Mannich aromatique (b2) est 1,2-propoxylé et présente un indice d'OH de 200 à 650 mg KOH/g.

7. Procédé selon l'une des revendications 1 à 6, **caractérisé en ce que** le polyesterpolyol aromatique (b3) est obtenu par estérification d'acides dicarboxyliques ou de leurs dérivés choisis dans le groupe consistant en l'acide phtalique, les dérivés de l'acide phtalique, l'acide isophtalique, les dérivés de l'acide isophtalique, l'acide téréphtalique, les dérivés de l'acide téréphtalique ou les mélanges de ceux-ci, au moins un dialcool et au moins un acide gras.

8. Procédé selon l'une des revendications 1 à 7, **caractérisé en ce que** le polyesteralcool (b3) présente une fonctionnalité OH supérieure à 2 jusqu'à moins de 4 et un indice d'hydroxyle de 200 à 400 mg KOH/g.

9. Procédé selon l'une des revendications 1 à 8, **caractérisé en ce que** les polyisocyanates (a) contiennent un ou plusieurs isocyanates choisis dans le groupe consistant en le 2,2'-MDI, le 2,4'-MDI, le 4,4'-MDI et les oligomères du MDI.

10. Procédé selon l'une des revendications 1 à 9, **caractérisé en ce que** le catalyseur (e) contient un carboxylate de métal ou d'ammonium.

11. Procédé selon l'une des revendications 1 à 10, **caractérisé en ce que** l'agent porogène (d) contient exclusivement des hydrocarbures en tant qu'agent porogène physique.

12. Procédé selon l'une des revendications 1 à 11, **caractérisé en ce que** l'élément composite en mousse rigide de polyuréthane est fabriqué en continu par le procédé à double bande.

13. Procédé selon l'une des revendications 1 à 12, **caractérisé en ce que** l'élément composite en mousse rigide de polyuréthane présente une épaisseur de 30 à 100 mm.

14. Élément composite en mousse rigide de polyuréthane pouvant être obtenu par un procédé selon l'une des revendications 1 à 13.
